# EUROPEAN PATENT APPLICATION

(11) **EP 4 570 963 A1**
(43) Date of publication of application: **18.06.2025**
(21) Application number: 23217359.1
(22) Date of filing: 15.12.2023
(51) Int. Cl.: C25B 11/032, C25B 1/23, C25B 3/26, C25B 11/052, C25B 11/053, C25B 11/056, C25B 11/077, C25B 11/093, C25B 3/03, C25B 11/065

(54) **GAS DIFFUSION ELECTRODE FOR ELECTROCHEMICAL PROCESSES**

(71) Applicant: Industrie De Nora S.P.A., 20134 Milano (IT)
(72) Inventor: GALLIANI, Daniela, 20134 Milan (IT); BARONE, Riccardo, 20134 Milan (IT); RIILLO, Luca, 20134 Milan (IT)
(74) Representative: Reitstötter Kinzebach

(57) **Abstract**

The present invention concerns a gas diffusion electrode for electrochemical processes comprising an electrically conductive porous gas diffusion layer; at least one porous catalyst layer arranged adjacent to said gas diffusion layer; and an ionomer layer arranged adjacent to said at least one porous catalyst layer. The invention also concerns an electrochemical cell comprising such a gas diffusion electrode and a method for manufacturing such a gas diffusion electrode.

## Description

### FIELD OF THE INVENTION

The present invention concerns gas diffusion electrodes for electrochemical processes, especially gas diffusion electrodes for the electrochemical reduction of carbon dioxide (CO₂) to carbon-based valuable products, such as carbon monoxide (CO) or ethylene (C₂H₄). The invention also concerns a method for manufacturing such gas diffusion electrodes and electrochemical cells employing such gas diffusion electrodes.

### BACKGROUND OF THE INVENTION

The remarkable advancements in energy conversion and storage technologies have fueled the growing demand for efficient electrochemical systems. Among them, gas diffusion electrodes (GDEs) have emerged as key components, revolutionizing the field by facilitating enhanced mass transfer and electrode kinetics. With their unique construction and versatile applications, gas diffusion electrodes have garnered significant attention across various domains, including fuel cells, electrochemical sensors, and electrolyzers. Gas diffusion electrodes, also referred to as three-phase electrodes, play a crucial role in bridging the electrochemical processes occurring at the solid electrode-electrolyte interface and the gaseous reactant species. Their distinctive architecture enables efficient transport of reactant gases, electron transfer, and electrolyte management, thereby boosting the overall performance of electrochemical devices. The construction of gas diffusion electrodes involves a carefully designed and layered structure that combines a porous catalyst layer, a gas diffusion layer, and a hydrophobic binder. The porous catalyst layer serves as the site for electrochemical reactions, where the catalyst material (such as platinum, palladium, or other transition metals) facilitates the conversion of reactant gases. It provides a high surface area for efficient catalysis and promotes effective electron transfer between the electroactive species and the electrode. The porosity of this layer allows the ingress and egress of reactant gases and facilitates the transport of ions and products. The gas diffusion layer, positioned adjacent to the catalyst layer, acts as a conductive pathway for both the gaseous reactants and the electrons. Typically composed of carbon-based materials, such as carbon cloth or carbon paper, carbon nanotubes, or graphene, the gas diffusion layer must exhibit high gas permeability, electrical conductivity, and mechanical stability. It not only assists in the uniform distribution of reactant gases across the catalyst layer but also aids in the efficient removal of reaction byproducts and water, thus preventing flooding and ensuring sustained electrochemical activity. To enhance the stability and durability of gas diffusion electrodes, a hydrophobic binder is introduced, which imparts water repellency to the gas diffusion layer. This hydrophobicity prevents flooding and helps maintain the desired gas diffusion characteristics by minimizing the intrusion of liquid water into the electrode structure. Commonly employed binders include polytetrafluoroethylene (PTFE) and various perfluorosulfonic acid (PFSA) polymers.

Gas diffusion electrodes find diverse applications in a range of electrochemical devices: in fuel cells, gas diffusion electrodes act as catalyst supports for the oxygen reduction and fuel oxidation reactions, facilitating the conversion of chemical energy into electrical energy. They also play a crucial role in electrochemical sensors, providing rapid and selective detection of various analytes by exploiting the electrochemical signal generated at the electrode-electrolyte interface. Furthermore, gas diffusion electrodes are integral components of electrolyzers, for instance in chloralkali electrolysis.

In recent years, the use of gas diffusion electrodes for electrochemical reduction of carbon dioxide has become a strongly growing area of research, especially because the combustion of fossil fuels, which still covers most of the global energy demand is associated with emission of carbon dioxide into the atmosphere leading to environmental crisis such as climate change and ocean acidification. To mitigate problems associated with the release of carbon dioxide into the environment, technologies have been investigated in recent years, which aim at a capture and reuse of carbon dioxide, for instance from the atmosphere or directly from sources of carbon dioxide generation. However, carbon dioxide is a very stable molecule requiring considerable energy input to convert carbon dioxide into other carbon-based valuable products. A particularly promising technology for such applications involves an electrochemical CO₂ reduction reaction, especially when energy from renewable energy sources is employed. Typical valuable products obtained from electrochemical CO₂ reduction are C1-C3 products, for instance carbon monoxide (CO) and ethylene (C₂H₄).

Initially, gas diffusion electrodes used for electrochemical CO₂ reduction have been based on gas diffusion electrodes which have originally been developed for fuel cells. Typically, a catalyst layer is deposited on a microporous layer by spraying a hydroalcoholic ink containing a mixture of catalyst and ionomer onto the microporous layer. The resulting structures exhibit some beneficial features such as a thin overall structure which enhances the accessibility of carbon dioxide, and a good ionic conductivity which ensures presence of electrolyte in the region of the catalyst. However, the structural role of the ionomer may cause problems in terms of durability and diminished electrical conductivity of the structure, since the ionomer is usually electrically insulating. Moreover, stability issues resulting from the precipitation of carbonates can arise.

Therefore, it is an object of the present invention to provide gas diffusion electrodes which address problems associated with electrochemical CO₂ reduction. Specifically:
Due to the poor solubility of CO₂ in a liquid electrolyte and its limited diffusion range, a good gas access throughout the whole structure must be guaranteed in order to minimize the competing hydrogen evolution reaction due to electrolysis of water.

Further, a good electrical conductivity of the overall structure must be guaranteed to allow the catalyst to be reached by electrons and aid the reduction reaction.

In addition, sufficient presence of liquid electrolyte at the region of the catalysts, while avoiding flooding of the whole structure, which would also result into a takeover of the above-mentioned competing hydrogen evolution reaction.

Finally, carbonate precipitation must be limited, which can occur when basic hydroxides are used as electrolytes due to a reaction of CO₂ with hydroxyl ions generated during CO₂ electrochemical reduction or provided by the basic electrolytes, such as metal hydroxides (MOH), which, in a basic environment, undergo a further transformation to metal carbonates. The precipitation of solid metal carbonates could disrupt the electrode structure and lead to a diminished efficiency of the overall process.

### SUMMARY OF THE INVENTION

Various aspects of the invention are set out in the accompanying claims.

Under one aspect, the invention relates to a gas diffusion electrode for electrochemical processes, particularly to a gas diffusion electrode for the electrochemical reduction of carbon dioxide, comprising an electrically conductive porous gas diffusion layer, at least one porous catalyst layer arranged adjacent to said gas diffusion layer, and an ionomer layer arranged adjacent to said at least one porous catalyst layer. In the sense of the present invention, the catalyst layer and the ionomer layer are structurally separated layers obtained from different precursor materials. Preferably, the precursor material for the catalyst layer does not contain any ionomer, and the precursor material for the ionomer layer does not contain any catalyst. The presence of two separate layers provides a novel route to regulating the penetration of electrolyte solution into the structure of the gas diffusion electrode, which can therefore be tailored to the electrochemical process concerned. As an ionomer typically is a hydrophilic species, the ionomer layer increases the hydrophilicity of the electrode surface without compromising the whole catalyst layer structure.

In addition to providing catalyst and ionomer in separate layers, the catalyst layer preferably comprises a mixture of a catalyst material, for instance a catalyst powder or a catalyst precursor powder, and a hydrophobic material, for instance a hydrophobic resin. Preferably, the catalyst layer does not contain an ionomer. Consequently, access of reactance to the catalyst material can be independently optimized by adjusting the properties of the ionomer layer and the porous catalyst layer.

Moreover, the configuration of the gas diffusion electrode of the present invention allows applying said ionomer layer on top of the pre-formed catalyst layer so that the catalyst layer can be manufactured separately from the ionomer layer. Separate processing of the two layers allows performing a thermal treatment on the catalyst layer, which ensures a better stability and enhancement of the hydrophobicity to a desired level. Such a thermal treatment would be impossible using conventional mixtures of catalyst and ionomer, since most ionomers are instable at high temperatures. Moreover, the configuration of the gas diffusion electrode of the present invention allows using catalyst precursor materials, which can be converted into the final catalyst material by thermal treatment in-situ before the ionomer layer is applied. Therefore, in one embodiment of the present invention, said at least one porous catalyst layer is obtained by thermal treatment of a precursor layer applied to the gas diffusion layer.

In addition to the catalyst material, the catalyst layer can comprise components that regulate electrical conductivity, for instance carbon powder, porosity, for instance fibrous material such as cellulose, and hydrophobicity, for instance fuoropolymers.

In one embodiment, said at least one porous catalyst layer comprises not only the above described first catalyst layer but also a second catalyst layer comprising a second catalyst material which differs from the first catalyst material. Deposition of two or more different catalysts in separate layers can be beneficial in certain electrochemical processes, for instance to obtain a tandem effect, which favors the production of certain desired products. The weight ratio of said first catalyst layer to said second catalyst layer is preferably selected within a range from 20:1 to 2:1.

Under one aspect of the present invention, the gas diffusion electrode is particularly configured to facilitate the electrochemical reduction of carbon dioxide. Accordingly, the catalyst material is preferably selected from the group consisting of transition metal complexes, metal micro-particles, metal nano-particles, metal oxides, metal oxide micro-particles, metal oxide nano-particles or combinations thereof. Micro-particles are particles have a size, for instance a diameter in the case of spherical particles or an effective diameter in the case non-spherical particles, in the micrometer range. Nano-particles have a size in the nanometer range. The transition metal complexes are preferably selected from the group consisting of porphorines, phtalocyanines, metalloporphorines, metallothalocyanines, or metal-organic frameworks (MOFs), especially nickel-based MOFs. The micro-particles and nano-particles are preferably selected from the group consisting of gold (Au), silver (Ag), copper (Cu), palladium (Pd), platinum (Pt), or alloys thereof. Particularly preferred are silver micro-particles having diameters in the range from 1 to 10 µm, copper particles having diameters in the range from 20 nm to 10 µm. If two catalyst layers are employed, it is particularly preferred that the second catalyst layer comprises silver nano-particles having diameters in the range from 20 nm to 200 nm.

The catalyst loading in the at least one catalyst layer is preferably comprised between 0.3 and 10 mg/cm².

In certain embodiments, said electrically conducted porous gas diffusion layer of the gas diffusion electrode of the present invention comprises a macroporous layer acting as a support and a microporous layer arranged between said macroporous layer and said at least one catalyst layer. According to the present invention, a *"macroporous layer"* is a usually carbon-based fibrous structure, for instance a cloth, paper or felt, with fibers have a diameter size of 5-50 µm and a *"microporous layer"* is a usually carbon-based continuous structure which includes pores having an average diameter size of 0.5-15 µm.

Preferably, the macroporous layer is a carbon-based layer, for instance a carbon cloth or a carbon paper having preferably a thickness selected within a range from 90 µm to 200 µm.

Said microporous layer preferably comprises a mixture of carbon and a hydrophobic material. The thickness of the microporous layer is preferably selected within a range from 45 µm to 140 µm.

The hydrophobic material of said at least one porous catalyst layer and/or the hydrophobic material of said microporous layer is preferably a hydrophobic resin, preferably fluororesins/fluoropolymers such as polytetrafluoroethylene (PTFE) polymers or perfluorosulphonic acid (PFSA) polymers.

The ionomer layer arranged as adjacent to the at least one porous catalyst layer can comprise anion-exchange polymers or cation-exchange polymers. Depending on the electrochemical process concerned, the ionomer layer can be tailored in such a manner that undesired counterions in the electrolyte are prevented from reaching the catalytic reaction sites, thus diffusing undesired side reactions and therefore increasing the overall efficiency of the electrochemical process. In the case of electrochemical reduction of a carbon dioxide, the ionomer layer is made from anion-exchange polymers, preferably having ammonium functionalities, such as piperidinium, and imidazolium functionalities. The anion-exchange polymer might also include phosphonium and sulphonium moieties.

The present invention also concerns an electrochemical cell comprising an anodic compartment, a cathodic compartment and a separator arranged between said anodic compartment and said cathodic compartment, wherein at least one of said anodic compartment and said cathodic compartment comprises a gas diffusion electrode as defined above. The separator can be a membrane or a diaphragm. Typically, the anodic compartment and the cathodic compartment comprise current collectors, which are in electrical contact with the electrode in the respective compartment. The current collector can be an integral part of the gas diffusion electrode of the present invention and can, for instance be bonded to the outer surface of the gas diffusion layer or, in case of true gas diffusion layers, to the outer surface of the microporous layer.

The present invention also concerns a method for manufacturing a gas diffusion electrode, particularly a gas diffusion electrode as defined above, comprising the following steps:
a) Preparing a catalyst ink by dispersing a catalyst material in a first solvent;
b) Preparing an ionomer-based ink by dispersing an ionomer in a second solvent;
c) Preparing an electrically conductive porous gas diffusion layer;
d) Coating said electrically conductive porous gas diffusion layer with said catalyst ink to form a catalyst layer;
e) Drying and/or thermally treating said catalyst layer to mobilize said catalyst material on said gas diffusion layer; and
f) Coating said catalyst layer with said ionomer-based ink.

The catalyst ink in step a) is typically prepared by dissolving a catalyst powder in a first solvent, for instance in water. The ink can also comprise a hydrophobic material, such as a fluororesin mentioned above and optionally surfactants, for instance non-ionic surfactant polymers that have a hydrophilic polyether portion and a hydrophobic aromatic portion. The catalyst ink can also include viscosity modifiers, preferably cellulose derivates. In some embodiments, the catalyst ink can also include carbon, preferably a mixture of hydrophobic acetylene black and hydrophilic acetylene black.

The ionomer-based ink in step b) is obtained by dispersing ionomers, for instance anion-exchange ionomers and/or cation-exchange ionomers, in the second solvent, which is typically a water-alcohol mixture. The solvent mixture of water-alcohol is preferably around 1:1 ratio by weight.

The coating in step d) can be accomplished using a variety of deposition techniques, such as brushing, rolled-to-roll gravure, slot dying or similar techniques. Typically, the coating is effected until a catalyst loading from 0.3 to 10 mg/cm² is obtained.

In step e), the applied coating can be dried to form the catalyst layer on the gas diffusion layer. In certain embodiments, step e) can comprise a thermal treatment at higher temperature to increase the bonding of the catalyst layer on the gas diffusion layer and/or to convert catalyst precursor materials into a finer catalyst material. Preferably, the thermal treatment in step e) comprises baking the assembly of porous gas diffusion layer and catalyst layer at a temperature in the range from 170°C to 350°C for a time in the range from 10 minutes to 24 hours.

In embodiments where the electrically conductive porous gas diffusion layer comprises a macroporous layer and a microporous layer, step c) preferably comprises the sub-steps c1) to c3) detailed below, which are executed before step d):
c1) providing a macroporous layer, for instance a carbon cloth or a carbon paper.
c2) providing a carbon-based ink, for instance a mixture of acetylene black and water, but mixtures of different carbons can also be used. Hydrophobic carbon materials are preferred for gas diffusion electrodes. The carbon-based ink can also comprise hydrophobic resins, typically fluororesins, having a preferred grain diameter in the range from 0.005 to 10 µm.
c3) depositing said carbon-based ink on said macroporous layer to form a microporous layer. In step c3), similar deposition techniques as described above may be employed, for instance brushing, rolled-to roll gravure, slot dying or similar.

In certain embodiments, depending on the deposition technique used in sub-step c3), step c) can comprise a further sub-step c4) executed after sub-steps c1) to c3) and before step d):
c4) baking the assembly of macroporous layer and applied microporous layer at a temperature in a range from 170°C to 350°C in air for time in a range from 10 minutes to 24 hours.

Carbon loading is typically in a range of 25 - 100 g/m², preferably in a range of 58 - 63 g/m².

In step f), various deposition techniques can be employed, but preferably, said ionomer-based ink is deposited on said catalyst layer by spray-coating. The final ionomer loading is preferably between 0.05 and 0.4 mg/cm².

The gas diffusion electrode of the present invention can be employed in a variety of applications. As preferred application is the electrochemical reduction of carbon dioxide to carbon based valuable products, for instance CO and ethylene. Other possible application include anionic exchange membrane (AEM) fuel cells, including unitized regenerative fuel cells (URFC), i.e. fuel cells which can operate in mode as a fuel cell combining oxygen and hydrogen gas to produce electricity and in a regenerative electrolyzer mode to electrolyze water. Other possible applications include acting as a cathode in AEM Water Electrolysis. The gas diffusion electrode of the invention ensures good performances and stability during operation.

### BRIEF DESCRIPTION OF THE DRAWINGS

The invention will now be described in connection with certain preferred embodiments and corresponding figures in more detail.

In the drawings:
- Fig. 1: shows a schematic drawing of a first embodiment of the gas diffusion electrode of the present invention;
- Fig. 2: shows a second embodiment of the gas diffusion electrode of the present invention; and
- Fig. 3: shows a schematic drawing of an electrolysis cell comprising a gas diffusion electrode of the present invention.

### DETAILED DESCRIPTION OF PREFERRED EMBODIMENTS

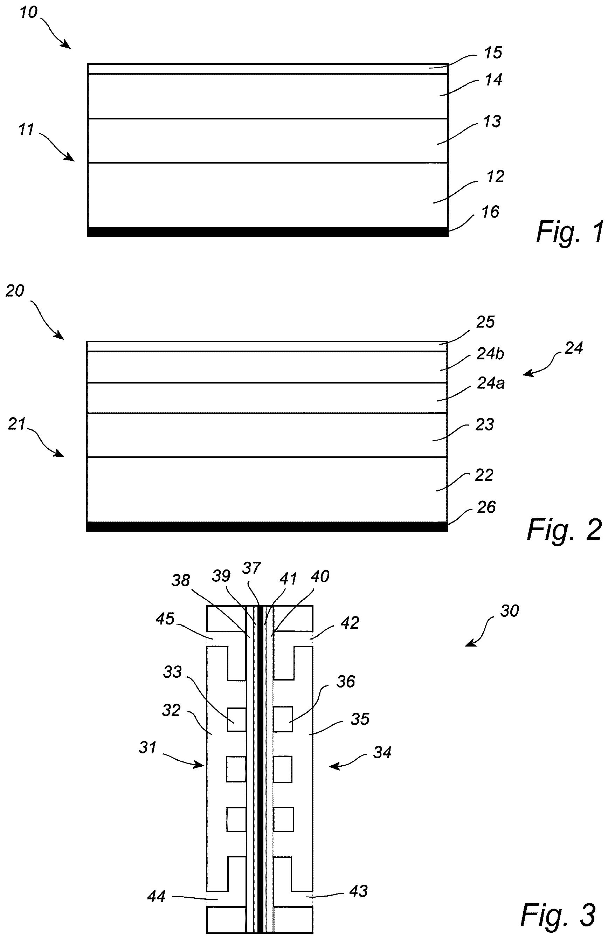

Fig. 1 shows a first embodiment of a gas diffusion electrode 10 according to the present invention, where a single catalyst layer is provided. As can be taken therefrom, the gas diffusion electrode 10 is provided with a gas diffusion layer 11 comprising a macroporous layer 12 and a microporous layer 13. The macroporous layer 12 acts as a support for a microporous layer 13 deposited on the macroporous layer 12. On top of the microporous layer 13, a catalyst layer 14 is applied. On top of the catalyst layer 14, an ionomer layer 15 is applied. The side of the macroporous layer 12, which is opposite to the side on which the microporous layer 13 is applied, is contacted by a current collector 16.

Fig. 2 shows a second embodiment of the gas diffusion electrode 20 according to the present invention, which essentially corresponds to the embodiment of Fig. 1. The gas diffusion electrode 20 of the second embodiment also comprises gas diffusion layer 21 comprising a macroporous layer 22 and a microporous layer 23. On top of the microporous layer 23, a catalyst layer 24 is provided. On top of the catalyst layer 24, an ionomer layer 25 is applied. The macroporous layer 22 is also contacted by a current collector 26. In contrast to the embodiment of Fig. 1, the catalyst layer 24 is formed by multiple layers 24a, 24b, where the multiple layers differ in catalyst composition.

Fig. 3 shows an electrochemical cell 30, having an anodic compartment 31 comprising an anodic current collector 32 which is provided with anodic gas flow channels 33 and a cathodic compartment 32 comprising a cathodic current collector 35 which is provided with cathodic gas flow channel 36. The anodic compartment 31 and the cathodic compartment 34 are separated by a membrane 37. In the present embodiment, the anodic compartment comprises an anodic gas diffusion electrode 38 which is provided with an anodic catalyst layer 39, for instance an iridium-based catalyst. The cathodic compartment 34 comprises a cathodic gas diffusion electrode 40 according to the present invention, for instance a cathodic gas diffusion electrode according to one of the embodiments of Figs. 1 and 2. The cathodic gas diffusion electrode 40 comprises a cathodic catalyst layer 41 which can, for instance be a silver-based catalyst, a MOF-based catalyst or a copper-based catalyst described in more detail below. The cathodic compartment 34 further comprises a CO2-gas input 42 and a reduction product output 43. The anodic compartment 31 comprises an anolyte input 45 and a reaction product output 44.

When a cell as depicted in Fig. 3 is used to carry out electrochemical reduction of carbon dioxide, reduction of carbon dioxide is carried out in the cathodic compartment. The specific reactions and products can vary depending on the catalyst, electrolyte, applied voltage, and desired product selectivity for a particular application. In the anodic compartment, oxidation reactions occur to maintain charge balance within the electrolytic cell. The specific reactions depend on the choice of electrolyte, the design of the system and the operating conditions. For instance, one of the primary desired reactions in the cathodic compartment is the reduction of carbon dioxide to carbon monoxide. This reaction is commonly targeted due to the industrial significance of carbon monoxide as a versatile chemical feedstock. The reaction can be represented as follows:

Cathode: CO₂ + 2e⁻+ H₂O → 2OH⁻ + CO

Another common reaction is the reduction of carbon dioxide to formate, which can serve as a precursor for various organic compounds. The reaction can be represented as follows:

Cathode: CO₂ + 2e⁻ + H₂O → HCOO⁻ + OH⁻

The choice of catalyst on the cathode surface plays a crucial role in determining the selectivity of carbon dioxide reduction and the formation of specific products. Different catalyst materials can promote different reaction pathways, influencing the desired product formation.

If an aqueous electrolyte in a neutral or basic environment is used, the reaction in the anodic compartment can be represented as follows:

Anode: 2OH⁻ → H₂O + 1/2 O₂ + 2e⁻

In non-aqueous electrolytes or solid-state electrolytes, other species present in the electrolyte may undergo oxidation to maintain charge balance. For example, in a non-aqueous electrolyte, the anodic half-cell reaction can involve the oxidation of anions or other species. The specific reaction would depend on the nature of the electrolyte and the available oxidizable species.

Anode: X⁻ → X + e⁻

The present invention will now be described with reference to certain examples.

### Examples

### Example 1: Silver based electrode

### 1.1: Preparation of catalyst ink

An aqueous ink is prepared by mixing a silver powder (size ranging from 0.5 µm to 5 µm), acetylene black carbon, a fluoropolymer such as PTFE, a surfactant such as Triton X100 surfactant and thickener such as carboxymethyl cellulose with water. The resulting ink is stirred for 15 minutes under vigorous magnetic stirring.

### 1.2: Preparation of ionomer-based ink

A diluted solution of an anionic exchange ionomer ink is prepared by dissolving an anionic exchange ionomer, in the present example a functionalized poly (aryl piperidinium) resin, in a hydroalcoholic solvent to obtain a diluted solution.

### 1.3: Preparation of electrically conductive porous gas diffusion layer

A suitable electrically conductive porous gas diffusion layer can be prepared as follows: Acetylene black is mixed with water, a non-ionic surfactant, a waterborne dispersant, a fluoropolymer, such as PTFE, and a poly(oxyethylene) (PEO) polymer. The resulting ink is stirred for 60 to 200 minutes. The ink, acting as a microporous layer, is then deposited on commercially available carbon cloth, acting as a microporous layer, by means of a slot-die or gravure coating machine and then baked for 1 to 14 hours between 250 - 320°C. The final gas diffusion layer has a thickness of 320-370 µm. The water contact angle of the microporous layer is in the range of 130-140°, the in-plane conductivity measured on the microporous layer side is in a range of 40-60 S cm⁻¹.

### 1.4: Coating of a conductive porous gas diffusion layer with catalyst ink

The ink prepared in step 1.1 is then coated on the gas diffusion layer prepared in step 1.3 by brushing in multiple (two or more) cycles, to reach a final catalyst loading of 2.8 mg/cm². Between cycles, a drying step consisting of thermally treating the manufacture for 5 to 30 minutes at a temperature of 50 to 100 °C is performed, preferably for 15 minutes at 80 °C.

### 1.5: Immobilizing catalyst material

The resulting assembly is then baked for 2 hours at 300°C.

### 1.6: Coating with ionomer-based ink

The ionomer ink prepared in step 1.2 is homogenously sprayed on top of the catalyst layer of the assembly obtained in step 1.5. The resulting layer is dried at room temperature. Ionomer final loading is in a range between 0.05-0.4 mg/cm².

### Example 2: MOF based electrode

### 2.1: Preparation of catalyst ink

An aqueous ink is prepared by mixing MOF Ni, acetylene black carbon, a fluoropolymer such as PTFE, a surfactant such as Triton X100 and a thickener such as carboxymethyl cellulose with water. The resulting ink is stirred for 15 minutes under vigorous magnetic stirring.

### 2.2: Preparation of ionomer-based ink corresponds to step 1.2 of Example 1.

### 2.3: Preparation of electrically conductive porous gas diffusion layer corresponds to step 1.3 of Example 1.

### 2.4: Coating of a conductive porous gas diffusion layer with catalyst ink corresponds to step 1.4 of Example 1.

### 2.5: Immobilizing catalyst material

The resulting assembly is then baked for 2 hours at 300°C in inert atmosphere of argon.

The final sample has a thickness of 385-410 µm. The water contact angle of the catalyst layer is in the range from 120° to 130° and the in-plane conductivity measured on the catalyst layer side is in a range from 50 to 60 Scm⁻¹.

### 2.6: Coating with ionomer-based ink corresponds to step 1.6 of Example 1.

The MOF-based gas diffusion electrode shows an enhanced activity in terms of Faradaic Efficiency and stability over time. With this gas diffusion electrode the Faradic Efficiency of Carbon Monoxide from the electrochemical reduction of CO₂ is in the range between 90%-98% with a degradation of 2%-5% during online test.

The improvement in stability is about 400% compared to the MOF-based gas diffusion electrode without ionomer.

The cell voltage is below 2.7V at a current density of 0.1 kA/m² for the entire duration of the test.

### Example 3: Copper based electrode

### 3.1: Preparation of catalyst ink

An aqueous ink is prepared by mixing metallic copper powder, a fluoropolymer such as polytetrafluoroethylene (PTFE), a surfactant such as Triton X100 and a thickener such as carboxymethyl cellulose with water. The resulting ink is stirred for 15 minutes under vigorous magnetic stirring.

### 3.2: Preparation of ionomer-based ink corresponds to step 1.2 of Example 1.

### 3.3: Preparation of electrically conductive porous gas diffusion layer corresponds to step 1.3 of Example 1.

### 3.4: Coating of a conductive porous gas diffusion layer with catalyst ink.

The catalyst ink is then coated on microporous layer of the gas diffusion layer obtained in step 3.3 by brushing into multiple (two or more) cycles, to reach a final catalyst loading of 1.0 mg/cm². Between cycles, a drying step consisting of thermally treating the manufacture for 5 to 30 minutes at a temperature of 50 to 100 °C is performed preferably for 15 minutes at 80 °C.

### 3.5: Immobilizing catalyst material

The resulting assembly is then baked for 2 hours at 300°C in inert atmosphere of argon resulting in catalyst of metallic copper (Cu).

The final sample has a thickness of 370-400 µm. The water contact angle of the catalyst layer is in a range from 130° to 140° and the in-plane conductivity measured on the catalyst layer side is in a range from 45 to 55 Scm⁻¹.

### 3.6: Coating with ionomer-based ink corresponds to step 1.6 of Example 1.

The Cu-based gas diffusion electrode show an enhanced activity towards C₂₊ products and good stability over time. The Faradaic Efficiency towards C₂₊ products is between 40%-55% with a degradation of 5%-10% during the test online. The online test reaches 200 hours. The cell voltage is stable at 2.9 V at a current density of 0.2 kA/m² for the entire duration of the test.

### Example 4: Silver based second catalyst layer

### 4.1: Preparation of catalyst ink

An aqueous ink is prepared by mixing silver nano-powder, isopropyl alcohol and hydroxypropyl methylcellulose with water. The resulting ink is sonicated for 15 minutes.
4.2: Preparation of ionomer-based ink corresponds to step 1.2 of Example 1.
4.3: Preparation of electrically conductive porous gas diffusion layer corresponds to step 1.3 of Example 1.
4.4: Coating of a conductive porous gas diffusion layer with catalyst ink corresponds to step 1.4 of Example 1 except that the final catalyst loading was 0.1 mg/cm².
4.5: Immobilizing catalyst material corresponds to step 2.5 of Example 2.
4.6: Coating with ionomer-based ink corresponds to step 1.6 of Example 1.

The preceding description is not intended to limit the invention, which may be used according to various embodiments without however deviating from the objectives and whose scope is uniquely defined by the appended claims.

In the description and in the claims of the present application, the terms "comprising", "including" and "containing" are not intended to exclude the presence of other additional elements, components or process steps.

The discussion of documents, items, materials, devices, articles and the like is included in this description solely with the aim of providing a context for the present invention. It is not suggested or represented that any or all of these topics formed part of the prior art or formed a common general knowledge in the field relevant to the present invention before the priority date for each claim of this application.

The project leading to this application has received funding from the European Union's Horizon 2020 research and innovation program under grant agreement No 851441.

## Claims

1. A gas diffusion electrode for electrochemical processes comprising
an electrically conductive porous gas diffusion layer;
at least one porous catalyst layer arranged adjacent to said gas diffusion layer; and
an ionomer layer arranged adjacent to said at least one porous catalyst layer.

2. The electrode according to claim 1, wherein said porous catalyst layer comprises a mixture of a catalyst material and a hydrophobic material.

3. The electrode according to one of claims 1 or 2, wherein said at least one porous catalyst layer is obtained by thermal treatment of a precursor layer applied to said gas diffusion layer.

4. The electrode according to one of claims 1 to 3, wherein said at least one porous catalyst layer comprises a first catalyst layer comprising a first catalyst material and a second catalyst layer comprising a second catalyst material.

5. The electrode according to claim 4, wherein the weight ratio of said first catalyst layer to said second catalyst layer is selected from a range of 20:1 to 2:1.

6. The electrode according to one of claims 1 to 5, wherein said gas diffusion electrode is configured to facilitate the electrochemical reduction of carbon dioxide, said catalyst layer comprising a catalyst material selected from the group consisting of transition metal complexes, metal micro-particles, metal nano-particles, metal oxides, metal oxide micro-particles, metal oxide nano-particles, or combinations thereof.

7. The electrode according to one of claim 6, wherein said electrically conductive porous gas diffusion layer comprises a macroporous layer and a microporous layer arranged between said macroporous layer and said at least one catalyst layer.

8. The electrode according to claim 7, wherein said macroporous layer is a carbon cloth or a carbon paper.

9. The electrode according to one of claims 7 or 8, wherein said microporous layer comprises a mixture of carbon and a hydrophobic material.

10. The electrode according to one of claims 2 to 9, wherein said hydrophobic material is a hydrophobic resin selected from the group consisting of polytetrafluoroethylene (PTFE) and perfluorosulfonic acid (PFSA) polymers.

11. Electrochemical cell comprising an anodic compartment, a cathodic compartment and a separator arranged between said anodic compartment and said cathodic compartment, wherein at least one of said anodic compartment and said cathodic compartment comprises a gas diffusion electrode of one of claims 1 to 10.

12. A method for manufacturing a gas diffusion electrode, comprising the following steps:
a) preparing a catalyst ink by dispersing a catalyst material in a first solvent;
b) preparing an ionomer-based ink by dispersing an ionomer in a second solvent;
c) preparing an electrically conductive porous gas diffusion layer;
d) coating said electrically conductive porous gas diffusion layer with said catalyst ink to form a catalyst layer;
e) drying and/or thermally treating said catalyst layer to immobilize said catalyst material on said gas diffusion layer; and
f) coating said catalyst layer with said ionomer-based ink.

13. The method of claim 12, wherein step e) comprises baking the assembly of porous gas diffusion layer and catalyst layer at a temperature in a range from 170°C to 350°C for a time in a range from 10 minutes to 24 hours.

14. The method of one of claims 13 or12, wherein in step c) the preparation of said electrically conductive porous gas diffusion layer comprises the sub-steps of c1) providing a macroporous layer, c2) providing a carbon-based ink, c3) depositing said carbon-based ink on said macroporous layer to form a microporous layer, and, optionally, c4) baking said assembly of macroporous layer and microporous layer at a temperature in a range from 170°C to 350°C in air for a time in a range from 10 minutes to 24 hours.

15. The method according to one of claims 12 to 14, wherein in step f) said ionomer-based ink is deposited on said catalyst layer by spray-coating.
